# FASCICULE DE BREVET EUROPEEN

(11) **EP 3 292 043 B1**
(45) Date de publication et mention de la délivrance du brevet: **14.04.2021**
(21) Numéro de dépôt: 16726359.9
(22) Date de dépôt: 03.05.2016
(51) Int. Cl.: B65B 11/10, B65B 21/24, B65B 35/16, B65B 35/24, B65B 35/40, B65B 35/44, B65G 47/08, B65B 65/00, B65B 53/06, B65B 35/26

(54) **MACHINE DE TRAITEMENT COMPRENANT UN DISPOSITIF DE CONDITIONNEMENT PAR LOTS AVEC ALIMENTATION CONTRÔLÉE ET SON PROCÉDÉ D'ALIMENTATION ASSOCIÉ**
MASCHINE MIT EINER VORRICHTUNG FÜR CHARGENVERPACKUNG MIT GEREGELTER ZUFUHR UND DEM ENTSPRECHENDEN ZUFÜHRVERFAHREN
PROCESSING MACHINE COMPRISING A BATCH PACKAGING APPARATUS WITH CONTROLLED FEED AND ITS CORRESPONDING FEEDING METHOD

(30) Priorité: 07.05.2015 FR 1554111
(43) Date de publication de la demande: 14.03.2018
(73) Titulaire: SIDEL PACKING SOLUTIONS, 21910 Corcelles-les-Cîteaux (FR)
(72) Inventeur: CHOPLIN, Gregory, 21910 Corcelles Les Cîteaux (FR); GROUAS, Jean-François, 21910 Corcelles Les Cîteaux (FR); DEROUAULT, Philippe, 21910 Corcelles Les Cîteaux (FR)
(74) Mandataire: Sidel Group
(86) Numéro de dépôt international: PCT/FR2016/051041
(87) Numéro de publication internationale: WO 2016/177964

(56) Documents cités:
- EP-A1- 2 471 728
- EP-A2- 0 191 158
- WO-A1-2014/191073
- WO-A1-2014/206733

## Description

La présente invention relève du domaine du conditionnement de produits en lots, et a pour objet une machine de traitement de produits comprenant un dispositif de conditionnement particulier, ainsi qu'un procédé d'alimentation de dispositif de conditionnement.

Dans ce domaine, les produits traités sont du type flacons, bouteilles, etc. et, subissent une première phase au cours de laquelle ils sont finalisés à l'unité, c'est-à-dire essentiellement remplis, bouchés, et étiquetés. A la sortie d'une telle phase, les équipements fonctionnent généralement à base de carrousel tournant, à la périphérie duquel sont embarqués les produits étiquetés. CA2330454 divulgue par exemple une solution d'étoile à la périphérie de laquelle les produits sont entraînés à l'unité.

Après cette première étape de préparation d'un produit ensuite prêt à l'usage, une deuxième étape de conditionnement est mise en œuvre dans le but d'obtenir, en sortie, des lots de plusieurs produits, regroupés en matrice rectangulaire, avec ou sans quinconcage, et maintenus ensemble par un enrobage du type film plastique, avec ou non une partie de fond en barquette cartonnée, par exemple. A la sortie de cette deuxième étape de conditionnement, les produits se présentent donc en groupe au sein duquel ils sont maintenus, comme un fardeau, par exemple. Ces lots se présentent généralement sous la forme d'une base rectangulaire, plusieurs produits s'étendant le long de chacun des deux bords. Un four de chauffage est classiquement utilisé pour assurer que le film, enrobé autour de ces produits organisés en matrice, assure, par rétraction, le maintien ensemble des différents produits. EP1379457 divulgue ainsi par exemple une solution d'enrobage, par film, d'un lot de produits. Un tel équipement de conditionnement secondaire est, par exemple, une fardeleuse, qui traite donc des produits qui, en entrée, sont répartis transversalement à la direction d'avance.

Pour cette seconde étape de conditionnement, il est donc nécessaire de transformer un flux depuis une configuration unifilaire en amont, en sortie du groupe de préparation, à une configuration multifilaire, c'est-à-dire avec plusieurs colonnes longitudinales, destinées à former chacune une portion longitudinale d'un lot.

Dans un équipement de conditionnement par fardelage, les étapes suivantes sont généralement exécutées avant l'enrobage par film, ou nappage : organisation du flux en couloirs séparés, définissant le nombre de produits d'un lot dans la direction transversale ; écartement périodique longitudinal des produits pour définir le nombre de produits d'un lot dans la direction longitudinale, comme par exemple proposé dans EP2936787 ; mise au pas, à l'aide d'un cycleur d'alimentation, des lots ainsi créés pour être synchronisés avec le module d'enrobage ou nappage ; puis transfert vers le tapis de nappage à l'aide du cycleur et d'une tôle morte.

Pour la transformation du flux en plusieurs couloirs, FR2847242 propose par exemple d'aménager, d'une part, un convoyeur pour flux unifilaire de produits, et, d'autre part, incliné par rapport au précédent, un convoyeur pour flux multifilaire. Sous l'effet d'un poussoir évoluant de façon longitudinal sur le second convoyeur, l'inclinaison entre les deux convoyeurs transforme directement, par projection géométrique, le flux unifilaire en rangées transversales, qu'il suffit ensuite de rapprocher les unes des autres pour obtenir un flux multifilaire compact.

US3193078 propose quant à lui une portion de convoyeur mobile, dont une extrémité est fixe et reçoit les produits fournis par le flux unifilaire, et dont l'extrémité opposée se déplace, par pivotement de ladite portion, pour venir en vis-à-vis d'un couloir de circulation aval, parmi plusieurs.

FR2907437 propose quant à lui une solution utilisant un élément intermédiaire mobile alternativement, recevant les produits, après une portion coudée, et les répartissant dans plusieurs couloirs de circulation.

Une façon classique de transformer un flux unifilaire en flux multifilaire repose aussi éventuellement sur une étape intermédiaire de convoyage en vrac, où les produits s'organisent alors généralement en quinconce. FR2604693 propose par exemple une solution optimisant le passage d'un flux unifilaire vers un flux multifilaire. Un des inconvénients majeurs d'une telle solution est que le passage indispensable ultérieur d'une telle organisation imbriquée en quinconce à une organisation où les produits sont simplement côte à côte génère bien souvent des coincements et n'est donc pas fiable en particulier à haute cadence ou pour des produits peu rigides.

DE4213557 propose par exemple un guidage qui s'évase au-dessus d'un moyen de convoyage qui ralentit progressivement, ce qui aboutit naturellement à cette configuration des produits en quinconce, à séparer ensuite en couloirs. EP1537037 propose ainsi un cadre mobile pour agiter le flux en vrac et en forcer alors le passage dans des couloirs séparés prédéfinis. US5235996 propose enfin quant à lui une solution de parois mobiles alternativement longitudinalement, dans le prolongement des parois délimitant les couloirs. Ces principes ne permettent toutefois pas d'éviter systématiquement les coincements EP2471728 A1 divulgue quant à lui le préambule des revendications 1 et 8.

Il existe donc aujourd'hui dans l'état de la technique un besoin pour améliorer l'alimentation d'une machine de conditionnement de produits en lots matriciels, du type fardeleuse, de sorte, en particulier, à éviter les défauts provoqués par des chutes, coincements, ou autres, occasionnés lors du passage d'une répartition unifilaire des produits à une répartition transversale des produits.

L'invention vise ainsi à proposer une solution dans laquelle l'alimentation d'une machine de conditionnement par lot est fiable, et permette aussi autant que possible une configuration globale peu encombrante et versatile.

Pour ce faire, l'invention propose d'utiliser un transfert des produits au cours duquel chaque produit est référencé et dont la position peut ainsi être connue et contrôlée à l'unité. Après préparation des produits, ces derniers sont saisis et déplacés de façon contrôlée jusqu'à la zone d'entrée du poste de conditionnement par fardelage, puis y sont déposés répartis transversalement. On évite ainsi un convoyage par bande transporteuse sur laquelle reposent les produits et sur laquelle leur position et stabilité n'est en pratique pas rigoureusement connue.

L'invention décrit ainsi un dispositif de conditionnement, pour conditionner en lots des produits, du type bouteilles, flacons, bidons, ou autre, au sein duquel, pour leur conditionnement, les produits évoluent le long d'une direction de convoyage, lesdits lots présentant, transversalement à ladite direction de convoyage, au moins deux produits, ledit dispositif comprenant un moyen d'alimentation, pour recevoir des produits circulant en unifilaire au niveau d'une zone de prise en amont et les amener au niveau d'une zone de dépose pour leur conditionnement ultérieur.

Ce dispositif est caractérisé en ce que le moyen d'alimentation comprend, d'une part, en zone de prise, un moyen de transfert à l'unité des produits arrivants en unifilaire, et, d'autre part, au moins un collecteur mobile et de position contrôlée, pour recevoir puis déplacer de façon contrôlée en position au moins un produit depuis le moyen de transfert jusqu'à la zone de dépose, le dispositif comprenant, en outre, un convoyeur en zone de dépose sur lequel le au moins un collecteur dépose le au moins un produit qu'il a préalablement embarqué en zone de prise.

L'invention a pour objet une machine de traitement utilisant ce dispositif tel que décrit à la revendication 1, à savoir une machine de traitement de produits, du type bouteilles, flacons, bidons, ou autres contenants, comprenant un groupe de préparation de produits à l'unité, délivrant des produits finis et référencés à l'unité les uns derrière les autres en unifilaire.

Cette machine est caractérisée en ce qu'elle comprend, en outre, monté en aval dudit groupe de préparation et recevant les produits que débite le groupe de préparation, un dispositif de conditionnement tel que défini ci-dessus.

L'invention a aussi pour objet une méthode mise en œuvre par ce dispositif telle que décrite à la revendication 8, à savoir un procédé d'alimentation d'un dispositif de conditionnement de produits tel que décrit ci-dessus, au sein duquel ils évoluent dans une direction de convoyage lors de leur conditionnement en lots.

Ce procédé est caractérisé en ce que les produits sont transférés de façon référencée à l'unité depuis une zone de prise en amont où les produits arrivent de façon référencée à l'unité les uns à la suite des autres jusqu'à une zone de dépose au niveau d'un convoyeur où ils circulent ensuite en plusieurs colonnes pour leur conditionnement.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 schématise une alimentation avec une navette circulant sur un rail en circuit fermé entre un module d'étiquetage et un module de fardelage ;
- la figure 2 présente une alimentation avec un circuit alternatif à celui de la figure 1 ;
- la figure 3 illustre une réalisation où chaque collecteur peut saisir simultanément plusieurs produits et les déposer à l'entrée d'une accumulation en couloirs ;
- la figure 4 montre un équipement à monter en aval d'un groupe de préparation, comprenant une vis de mise au pas et une roue de transfert ;
- la figure 5 montre un principe avec un sens de circulation inverse à celui de la figure 4 ;
- la figure 6 montre le chargement d'un collecteur multiproduit depuis une roue de transfert ;
- la figure 7 schématise l'architecture classique d'un équipement de conditionnement par fardelage ;
- la figure 8 montre une possibilité de circuit pour le rail sur lequel circulent les collecteurs, avec plusieurs tronçons.

L'invention décrit tout d'abord un dispositif de conditionnement 1, pour conditionner en lots 2 des produits 3, du type bouteilles, flacons, bidons, ou autre, au sein duquel, pour leur conditionnement, les produits 3 évoluent le long d'une direction de convoyage 4, lesdits lots 2 présentant, transversalement à ladite direction de convoyage 4, au moins deux produits 3, ledit dispositif 1 comprenant un moyen d'alimentation 5, pour recevoir des produits 3 circulant en unifilaire au niveau d'une zone de prise 6 en amont et les amener au niveau d'une zone de dépose 7 pour leur conditionnement ultérieur.

Les produits 3 sont donc confectionnés en amont du dispositif de conditionnement 1, notamment dans un groupe de préparation de produits 3. Ces produits 3 arrivent donc dans le dispositif de conditionnement 1 pour y être conditionnés en vue d'une expédition. Le dispositif de conditionnement 1 ne modifie donc généralement pas la structure elle-même des produits 1, ce qui est fait en amont. Ainsi, en amont du dispositif de conditionnement 1, le produit 1 est fabriqué par confection du contenant lui-même, son remplissage, son bouchage, son étiquetage. La séquence des étapes peut varier : confection du contenant, étiquetage, remplissage puis bouchage, ou confection du contenant, remplissage, bouchage, puis étiquetage, etc.

Le dispositif de conditionnement 1 se différencie donc des modules en amont en ce qu'il ne transforme pas intrinsèquement les produits 3 à l'unité. De façon générale, le dispositif de conditionnement 1 reçoit donc des produits 3 finis, prêts à être conditionnés en lots 2, sous forme de fardeau, caisse, etc. De façon générale, il reçoit ces produits 3 du dernier module assurant la fabrication du produit 3 fini, autrement appelé groupe de préparation.

Ce groupe de préparation peut donc être le module terminal lui-même, à savoir un module d'étiquetage 18 ou un module de remplissage-bouchage. Le groupe de préparation peut aussi englober une succession de modules encore en amont, comme le remplissage, le soufflage, le bouchage, voire toute la succession de modules nécessaires pour fabriquer des produits 3 à partir de préformes, etc. De façon préférée, le module juste avant le dispositif de conditionnement 1 est un module d'étiquetage 18 ou un module de remplissage-bouchage.

Grâce à un moyen d'alimentation 5, le dispositif de conditionnement 1 reçoit donc les produits 3 depuis la sortie d'un groupe de préparation, qui débite à l'unité des produits 3 finis, et qui doivent être mis en groupes pour une expédition.

Le dispositif de conditionnement 1 peut être préférablement un conditionnement par fardelage, où un film 16 vient être enrobé autour d'un lot 2 de produits 3. Le dispositif de conditionnement 1 comprend alors un moyen d'alimentation 5 pour récupérer les produits 3 qui viennent d'être terminés et les traiter par un fardelage au cours duquel un film 16 est enrobé autour de plusieurs produits 3 pour en former un groupe autoporté. Le dispositif de conditionnement 1 doit donc assurer tant le déplacement des produits 3 depuis le groupe de préparation jusqu'aux modules de traitement ultérieur par conditionnement que l'organisation des produits 3 en lots 2.

Les lots 2, en aval du moyen d'alimentation 5, présentent notamment au moins une rangée de plusieurs produits 3 transversale à ladite direction de convoyage 4, voire plusieurs colonnes de produits 3 s'étendant dans la direction de convoyage 4. Les lots 2 peuvent être organisés en quinconce, avec un produit 3 imbriqué entre deux autres produits 3 à côté de lui, ou en matrice non quinconcée. Bien entendu, le dispositif de conditionnement 1 peut être adapté pour traiter plusieurs files de lots 2 parallèles dans la direction de convoyage 4.

Le moyen d'alimentation 5 récupère donc les produits 3 finis dans une zone de prise 6, au niveau du groupe de préparation, et les amène dans une zone de dépose 7, à partir de laquelle ils vont être conditionnés en fardeaux. Les produits 3 sont maintenus et positionnés à l'unité au sein du groupe de préparation amont au dispositif de conditionnement 1.

Selon l'invention, le moyen d'alimentation 5 comprend, d'une part, en zone de prise 6, un moyen de transfert 8 à l'unité des produits 3 arrivants en unifilaire, et, d'autre part, au moins un collecteur 9 mobile et de position contrôlée, pour recevoir puis déplacer de façon contrôlée en position au moins un produit 3 depuis le moyen de transfert 8 jusqu'à la zone de dépose 7, le dispositif 1 comprenant, en outre, un convoyeur 10 en zone de dépose 7 sur lequel le au moins un collecteur 9 dépose le au moins un produit 3 qu'il a préalablement embarqué en zone de prise 6.

Le moyen de transfert 8, qui reçoit les produits 3 à l'unité depuis le groupe de préparation, peut prendre la forme d'une étoile rotative entre les branches de laquelle peuvent venir les produits 3. Le au moins un collecteur 9 interagit avec ce moyen de transfert 8 pour saisir les produits 3 qu'il comprend. Les produits 3 passent donc du moyen de transfert 8 au collecteur 9 en étant référencé en permanence, à la différence de configurations dans lesquelles, par exemple, un tapis de convoyage amène une file de produits 3 dans un collecteur 9, et où les produits 3 ne sont donc pas amenés au collecteur 9 de façon contrôlée et référencée en position à l'unité.

Le moyen d'alimentation 5 gère donc les produits 3 en en contrôlant systématiquement la position, de sorte qu'il est possible, à tout moment, de connaître la position, exacte de chaque produit 3 dans le moyen d'alimentation 5. Cette traçabilité de la position est assurée successivement au moins par le moyen de transfert 8 ainsi que par les collecteurs 9.

Une interaction mécanique est donc prévue entre le collecteur 9 et chaque produit 3 qu'il transporte, de sorte que la position du collecteur 9, connue, donne directement l'information de la position des produits 3.

Comme il sera encore décrit plus tard, la cadence des produits 3 est assurée par le moyen de transfert 8, qui conditionne l'espacement entre les produits 3 successifs. Il se trouve en zone de prise 6, où les produits 3 circulent les uns après les autres avec un espacement contrôlé et de façon contrôlée en position. Le collecteur 9 assure, quant à lui, au moins le déplacement depuis la zone de prise 6, directement au niveau du moyen de transfert, dans lequel la position de chaque produit 3 est connue, jusqu'à un convoyeur 10 en zone de dépose 7. Le référencement des produits 3 n'est donc jamais perdu dans le moyen d'alimentation 5, en particulier puisque les produits 3 du moyen de transfert 8 sont directement récoltés par des collecteurs 9 pilotés en position.

Un moyen d'entraînement ou étoile est généralement prévu à la sortie du groupe de préparation, dans lequel les produits 3 sont maintenus et référencés à l'unité. Comme il sera encore détaillé plus loin, ce moyen d'entraînement du groupe de préparation et le moyen de transfert 8 du dispositif de conditionnement peuvent être le même moyen.

Les collecteurs 9 et le moyen de transfert 8 en amont sont donc coordonnés, et chaque produit 3 est suivi en position depuis ledit moyen de transfert 8, qui, comme il a déjà été évoqué, peut-être le moyen d'entraînement situé à la sortie du groupe de préparation, ou au moins synchronisé avec lui. Le traitement spécifique de chaque produit 3 est ainsi connu et maîtrisé tout au long du processus, sans perte de contrôle à l'occasion de l'étape de conditionnement.

Le fait de référencer le produit 3 en position depuis la prise jusqu'à la dépose permet de se passer de convoyeurs à tapis transporteurs dans lesquels les produits peuvent chuter ou se positionner d'une façon problématique pour une mise en colonne dans la direction de convoyage 4. La maîtrise et le contrôle de la position des collecteurs 9 permettent aussi de déposer les produits 3 de façon contrôlée en position, et donc, par exemple, de les déposer immédiatement à un endroit qui correspond à la position ultérieure du produit 3 dans un lot 2.

Selon une caractéristique additionnelle possible, le dispositif de conditionnement 1 présente une zone d'accumulation aval 11, au sein de laquelle les produits 3 peuvent s'accumuler en plusieurs colonnes adjacentes qui s'étendent le long de la direction de convoyage 4 après avoir été déposés par le moyen d'alimentation 5, de sorte à assurer que chaque rangée transversale à la direction de convoyage 4 soit complète et présente tous les produits 3 nécessaires pour former un lot 2.

Cette zone d'accumulation aval 11 peut être réalisée en particulier à l'aide d'une succession de deux tapis dont le premier circule plus vite et sur lequel les produits 3 sont déposés, des séparations longitudinales délimitant une pluralité de couloirs dans lesquels les produits 3 s'agencent alors en colonnes adjacentes, pour une séparation ultérieure créant des lots 2 d'au moins une rangée de plusieurs produits 3 transversale. Les collecteurs 9 amènent donc les produits 3 dans le prolongement des couloirs délimités par les parois de séparation successives. L'accumulation permet ensuite de s'assurer que les produits 3 successifs dans la direction de convoyage 4 sont bien les uns contre les autres et en nombre suffisant pour former un lot 2 complet, en particulier dans le cas où chaque lot 2 doit avoir plusieurs rangées transversales les unes contre les autres.

Selon une autre caractéristique additionnelle possible, le dispositif de conditionnement 1 comprend, d'une part, un convoyeur principal 12, qui déplace les produits 3 pour leur conditionnement au sein dudit dispositif en aval du moyen d'alimentation 5, et, d'autre part, un convoyeur de dépose 13 formant le convoyeur 10 sur lequel le au moins un collecteur 9 dépose le au moins un produit 3 qu'il a embarqué, l'avance du convoyeur de dépose 13 étant synchronisée avec la dépose successive de produits 3 sur lui assurée par le au moins un collecteur 9.

Le convoyeur principal 12 assure le déplacement des produits 3 au cours de leur traitement par conditionnement du type fardelage, et peut avoir des tronçons distincts, en particulier pour une circulation au sein d'un module de sélection 22, d'un module cycleur 14, d'un moyen de nappage 15, voire d'un tunnel de rétractation thermique de film 16.

Il est donc proposé ici d'avoir, d'une part, un convoyeur de dépose 13, dédié à recevoir les produits 3 déposés par les collecteurs 9, et, d'autre part, un convoyeur principal 12, en aval au convoyeur de dépose 13 qui l'alimente. Le fonctionnement du convoyeur de dépose 13 peut ainsi être synchronisé avec la dépose de produits 3 par les collecteurs 9, pour qu'ils forment successivement les rangées transversales des lots 2, alors que le convoyeur principal 12, en particulier s'il s'agit du convoyeur assurant le transfert des produits au sein du tunnel de rétractation, continue à fonctionner par exemple en continu. Le convoyeur de dépose 13 avance donc d'une distance correspondant à un produit 3 dans le sens longitudinal de la direction de convoyage 4 pour amener une surface d'accueil libre pour la rangée suivante. L'avance du convoyeur de dépose 13, dédiée à la dépose, peut ainsi être calculée pour que les rangées d'un même lot 2 viennent au contact les unes des autres, mais que les rangées de lots 2 différents soient éloignées.

On comprendra qu'il est avantageux de déposer les produits 3 le plus proche possible du nappage, pour profiter au maximum du référencement en position assuré par le moyen d'alimentation 5 et éviter les portions de convoyeurs sur lesquelles les produits 3 ne peuvent pas être référencés.

Le dispositif de conditionnement 1 prend préférablement la forme d'un équipement de conditionnement par fardelage, où les lots 2 successifs sont enrobés d'un film 16. Un tel dispositif de conditionnement 1 comprend au moins, avant le four de rétractation, un moyen de nappage 15 pour enrober les lots 2 successifs de film 16. L'espacement correct des lots 2 dans la direction de convoyage 4 peut être assuré par la succession d'un module de sélection 22 et d'un module cycleur 14, visant essentiellement à amener à l'entrée du module de nappage 15 des lots 2 compacts et complets, correctement espacés.

Le moyen d'alimentation 5 peut alors déposer les produits 3 en amont de ces deux modules, qui se chargeront de délimiter longitudinalement les lots 2. La formation des lots 2 peut alors ne peut être assurée à l'occasion de la dépose des produits 3 par le moyen d'alimentation 5. Dans ces cas, le dispositif de conditionnement 1 comprend un module adapté pour éloigner longitudinalement les uns des autres dans la direction de convoyage 4 les produits 3 organisés en colonnes adjacentes s'étendant dans ladite direction, de sorte à former des lots 2 successifs, du type module cycleur 14 ou de sélection 22, le moyen d'alimentation 5 déposant les produits 3 à l'entrée dudit module, éventuellement au niveau d'un convoyeur de dépose 13.

Le moyen d'alimentation 5 peut aussi déposer les produits 3 en lots 2 directement, notamment en les déposant au même endroit dans la zone de dépose 7, le dégagement des produits 3 précédemment posés étant assurés par le mouvement du convoyeur de dépose 13, voire en les déposant à des endroits différents pour constituer un lot 2 dont les produits 3 ne seront déplacés qu'une fois qu'il aura été complété. Si les lots 2 sont organisés directement lors de la dépose par le moyen d'alimentation 5, il est envisageable que les collecteurs 9 libèrent les produits 3 directement au niveau du module de nappage 15, où ils seront enrobés de film 16 une fois que le lot 2 est complet. Dans ces réalisations du dispositif de conditionnement 1, il comprend un moyen de nappage 15, où les produits 3 organisés en lots 2 successifs sont enrobés de film 16 pour un rétreint ultérieur visant la formation de fardeaux autoportés maintenu par ledit film 16, le moyen d'alimentation 5 déposant les produits 3 à l'entrée dudit moyen de nappage 15, éventuellement directement sur le film 16 déjà partiellement étendu sur le tapis formant alors le convoyeur principal 12. Ce convoyeur principal 12 peut être animé d'un mouvement continu, le rythme de la dépose des produits 3 successive étant alors coordonné pour former directement les lots 2 sur lui.

Le dispositif de conditionnement 1 peut aussi présenter d'autres caractéristiques qui sont détaillées ci-dessous.

Selon une caractéristique additionnelle possible, le au moins un collecteur 9 est mis en mouvement entre la zone de prise 6 et la zone de dépose 7 grâce à un principe de moteur linéaire. Le collecteur 9 se trouve donc embarqué sur une navette dont le mouvement est provoqué par un principe de moteur linéaire. Une telle navette repose donc sur un socle avec lequel se produit une interaction magnétique qui déplace la navette dans une direction ou l'autre le long du socle ou rail 21. La vitesse du collecteur 9 est donc variable et sa position est connue spécifiquement, ce qui contribue à la maîtrise de la position des produits 3 : la position de chaque collecteur 9 est connue, et, comme le collecteur 9 contrôle la position du au moins un produit 3 qu'il embarque, voire qu'il maintient fermement, la position de chaque produit 3 est donc connue au moins par rapport au bâti du convoyeur 10.

Le dispositif de conditionnement 1 est donc muni d'une unité de contrôle qui pilote le mouvement des collecteurs 9 au travers du moteur linéaire sur lequel ils sont montés. Comme il est aussi évoqué ailleurs, cette unité de pilotage contrôle préférablement aussi le mouvement du convoyeur 10 sur lequel les produits 3 sont déposés, et ce de façon coordonnée avec le mouvement des collecteurs 9.

Selon une autre caractéristique possible, le dispositif de conditionnement 1 comprend, en outre, un rail 21 de guidage avec une portion en boucle fermée, le au moins un collecteur 9 prenant la forme d'une navette circulant sur ledit rail 21, entre la zone de prise 6 et la zone de dépose 7. Le rail 21 assure donc la fonction de moteur linéaire et s'étend préférablement essentiellement horizontalement, c'est-à-dire parallèlement au plan du convoyeur 10. Les navettes portant les collecteurs 9 circulent donc le long de ce rail 21 qui leur permet d'arriver tant en zone de prise 6 qu'en zone de dépose 7. La portion fermée de ce rail 21 permet d'effectuer tant l'aller que le retour.

Grâce à l'utilisation d'un principe de moteur linéaire, les collecteurs 9 peuvent se déplacer les uns par rapport aux autres et peuvent être déplacés séparément. La position de chaque collecteur 9 est maîtrisée à l'unité.

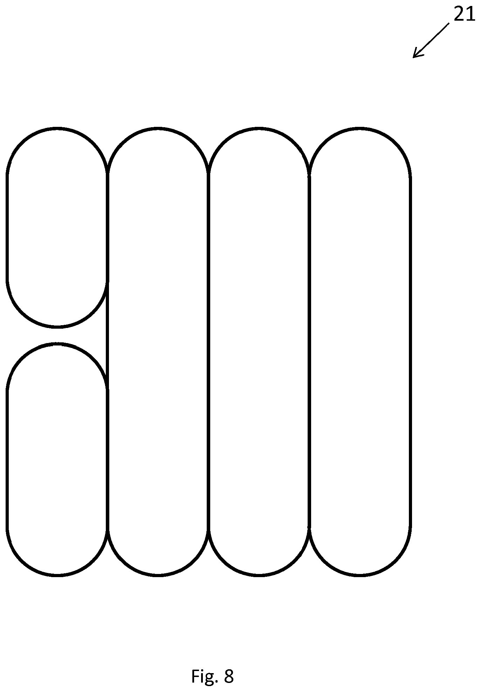

Dans des réalisations avantageuses, le circuit du rail 21 comprend une portion active servant à relier, dans un sens et dans l'autre, la zone de prise 6 et la zone de dépose 7, ainsi qu'au moins un aiguillage permettant de connecter ladite portion active à d'autres portions du circuit, comme le montre la figure 8.

La portion active permet donc au collecteur 9 de circuler pour remplir sa fonction de transport entre la zone de prise 6 et la zone de dépose 7. Les autres portions peuvent servir, par exemple, à mettre hors circuit des produits 3 en amenant sur un tronçon particulier les collecteurs 9 qui sont identifiés comme les véhiculant. Ces autres portions peuvent aussi servir à permuter des collecteurs 9, et donc à extraire des collecteurs 9 usagés pour une maintenance, voire à mettre hors circuits des collecteurs 9 qui deviennent inadaptés pour cause de changement de format, ou encore à laisser temporairement en attente des collecteurs 9 en vue d'un nouveau format de produits 3, etc. Le rail 21 peut ainsi être pourvu lui-même d'une zone d'accumulation de collecteurs 9 vides ou pleins, pour assurer une accumulation entre le groupe de préparation et le convoyeur 10.

Ainsi, dans certaines réalisations, le circuit du rail 21 de guidage comprend, en outre, au moins une portion dédiée à recevoir des collecteurs 9 en attente, notamment des collecteurs 9 provenant de la zone de prise 6 mais n'étant pas encore autorisés à aller en zone de dépose 7, ou des collecteurs 9 provenant de la zone de dépose 7 mais n'étant pas encore autorisés à aller en zone de prise 6, ou encore des collecteurs 9 adaptés à un autre format de produit 3.

Selon une autre caractéristique additionnelle possible, le circuit du rail 21 de guidage comprend, en outre, reliée à la portion active, une portion d'éjection sur laquelle sont amenés à circuler les collecteurs 9 transportant au moins un produit 3 non conforme récolté en zone de prise 6, pour éviter que ledit produit 3 ne soit amené en zone de dépose 7. Une telle portion permet ainsi de gérer la présence de produits 3 non conformes en aval du moyen de transfert 8 et qui sont donc pris dans les collecteurs 9.

Selon une autre caractéristique additionnelle possible, le au moins un collecteur 9 a une capacité qui correspond à un seul produit 3, de sorte qu'un collecteur 9 ne peut emporter qu'un seul produit 3 à chaque fois de la zone de prise 6 à la zone de dépose 7, le moyen d'alimentation 5 comprenant notamment une pluralité de collecteurs 9, préférablement au moins un groupe de collecteurs 9 formé d'autant de collecteurs 9 que le nombre de produits 3 qui forment une rangée d'un lot 2 transversale à la direction de convoyage 4, voire que le nombre de produits 3 qui forment plusieurs rangées alignées, destinées à contribuer à plusieurs lots 2 alignées transversalement.

Un des avantages des collecteurs 9 qui traitent les produits 3 à l'unité est que l'éventuelle éjection hors de la portion utile du rail 21 peut se faire de façon précise, en évitant de sortir des produits 3 qui sont conformes, mais montés sur un collecteur 9 devant être sorti car comprenant au moins un produit 3 non conforme. Un autre avantage est qu'en cas de manque sur le moyen de transfert 8, le collecteur 9 précédent peut se déplacer, et le collecteur 9 suivant rester en attente. On comprendra ainsi que de façon générale, le contrôle des produits 3 à l'unité assure un meilleur process de traitement, plus efficient, puisque chaque produit 3 ne subit que les opérations qui le concernent. Autrement dit, le traitement de chaque produit 3 lui est adapté spécifiquement.

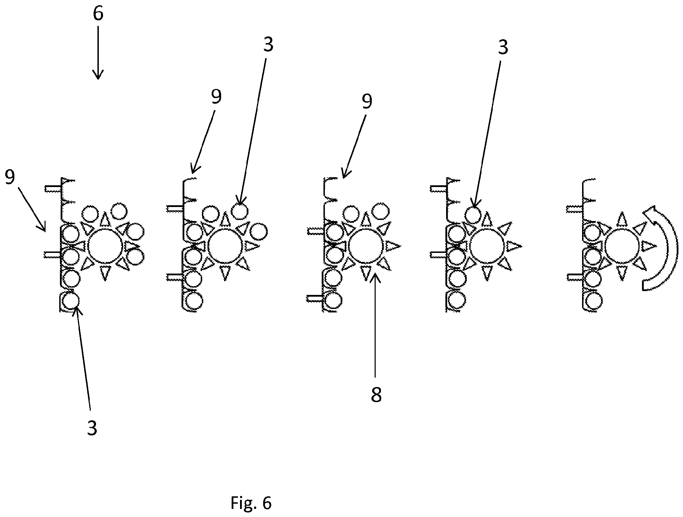

Selon une autre caractéristique possible, le au moins un collecteur 9 a une capacité de plusieurs produits 3, de sorte à pouvoir saisir en zone de prise 6 et amener en zone de dépose 7 une pluralité de produits 3 à chaque fois, préférablement autant de produits 3 que le nombre de produits 3 qui forment une rangée du lot 2 transversale à la direction de convoyage 4, voire plusieurs rangées alignées destinées à plusieurs lots 2 à côté les uns des autres. Les multiples produits 3 que peut prendre le collecteur 9 arrivent donc les uns après les autres dans le collecteur 9, et, comme le montre la figure 6, le collecteur 9 se déplace au fur et à mesure pour mettre une alvéole d'accueil libre en vis-à-vis de chaque nouveau produit 3 à récupérer depuis le moyen de transfert 8. L'avantage d'un collecteur multiple est en particulier de pouvoir facilement déposer tous les produits 3 simultanément en zone de dépose 7.

Selon une autre caractéristique additionnelle possible, le moyen d'alimentation 5 comprend une pluralité de collecteurs 9 qui sont mobiles les uns par rapport aux autres, notamment pour se rapprocher ou s'éloigner sur le rail 21 de guidage. Il est ainsi possible, par exemple, de regrouper les uns à côté des autres les collecteurs 9 pour en manœuvrer simultanément la dépose.

Comme les collecteurs 9 déposent généralement les produits 3 au même endroit dans le sens longitudinal, il est préférable que tous les produits 3 formant une même rangée transversale soient effectivement déposés au même moment, ce qui simplifie la régulation du déplacement longitudinal du convoyeur 10. Dans les cas où l'intégralité des produits 3 d'une rangée transversale est contenue dans plusieurs collecteurs 9, ces collecteurs 9 peuvent, pour déposer les produits 3, se regrouper les uns contre les autres et déposer ensuite les produits 3 simultanément.

Bien entendu, cela est applicable aux cas où la dépose se fait pour des produits 3 qui sont ensuite répartis dans plus d'un lot 2.

Selon une autre caractéristique additionnelle possible, le moyen d'alimentation 5 comprend, pour fournir les produits 3 à l'unité à l'au moins un collecteur 9, au niveau de la zone de prise 6, un moyen de transfert 8 de produits 3 à l'unité, du type étoile, la vitesse du produit 3 dans ledit moyen de transfert 8 et la vitesse du collecteur 9 étant, lors du passage de l'un à l'autre, parallèles, ce qui est en particulier illustré à la figure 6, et éventuellement aussi de même sens et amplitude. Le produit 3 ne subit donc aucune variation de mouvement ni de vitesse lors de son introduction dans le collecteur 9. Les produits 3 passent donc d'un moyen de déplacement dans lequel ils sont référencés à l'unité, à savoir le moyen de transfert 8, à un autre moyen de déplacement dans lequel ils sont là aussi référencés à l'unité, à savoir un collecteur 9. Ce passage de l'un à l'autre se fait sans choc ni pression pour le produit 3, qui n'est donc pas déstabilisé et ne risque pas de chuter ou de se casser.

Le dispositif se différencie ainsi des équipements où les produits 3 arrivent dans un collecteur avec une vitesse perpendiculaire au déplacement ultérieur du collecteur 9, et où les produits 3 subissent alors des chocs pouvant conduire à des chutes.

Comme le montre la figure 6, au moment où le produit 3 passe du moyen de transfert 8 au collecteur 9, il est animé d'un mouvement de même vitesse que celui qu'a le collecteur 9 pour se diriger vers la zone de dépose 7. Le collecteur 9, en particulier lorsqu'il est dimensionné pour plusieurs produits 3, peut donc avoir un mouvement continu sans risque de coincement.

L'invention a aussi pour objet une machine de traitement 17 de produits 3, du type bouteilles, flacons, bidons, ou autres contenants, comprenant un groupe de préparation de produits 3 à l'unité, délivrant des produits 3 finis et référencés à l'unité les uns derrière les autres en unifilaire.

Comme il a déjà été décrit plus haut, le groupe de préparation de produits 3 consiste en au moins l'étape ultime de fabrication des produits 3 eux-mêmes, voire en au moins une autre étape amont. Le groupe de préparation de produits 3 comprend ainsi notamment, par exemple, un module de soufflage de bouteille en plastique, un module de remplissage dans lequel les produits 3 sont remplis, un module de bouchage où les produits 3 sont bouchés, et/ou un module d'étiquetage 18 au sein duquel un étiquetage est apposé sur chaque produit 3 successif à l'unité, notamment par collage ou impression. Le groupe de préparation peut ainsi consister essentiellement en un module d'étiquetage 18 final, ou encore tout module de finalisation de produit 3 ou toute combinaison de tels modules.

Selon l'invention, cette machine comprend, en outre, monté en aval dudit groupe de préparation et recevant les produits 3 que débite le groupe de préparation, un dispositif de conditionnement 1 tel que décrit ci-dessus. A la sortie du groupe de préparation, les produits 3 sont donc référencés en position à l'unité et intrinsèquement finis et prêts pour un conditionnement en lots 2 par le dispositif de conditionnement 1 dont le moyen d'alimentation 5 conserve le référencement à l'unité des produits 3.

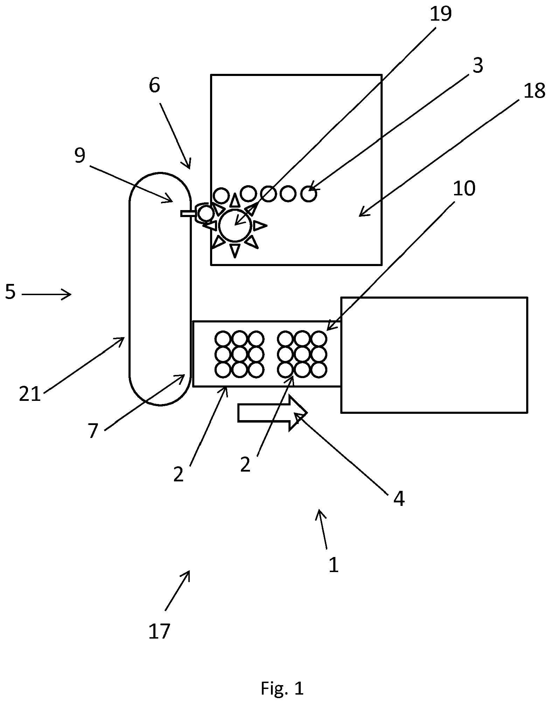

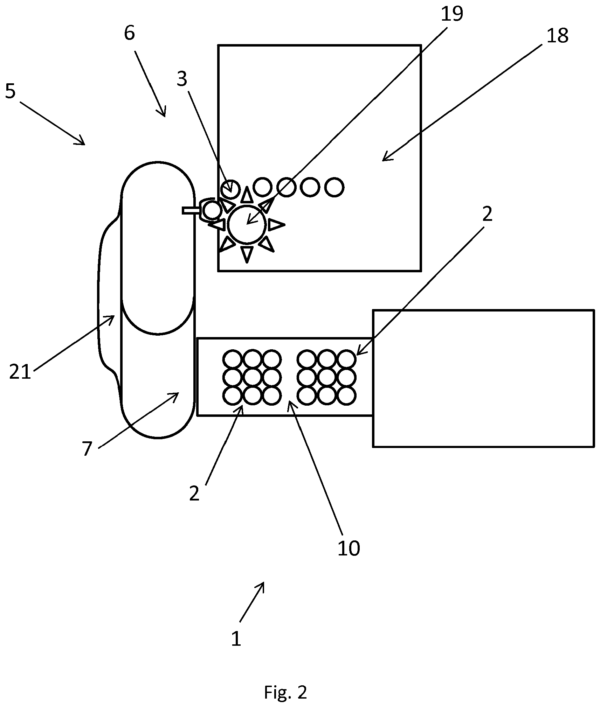

Dans des configurations avantageuses, telles que celles schématisée aux figures 1 à 5, le groupe de préparation et le dispositif de conditionnement 1 sont agencés de sorte que, vu de haut, le moyen d'alimentation 5, entre le groupe de préparation et les éléments suivants du dispositif de conditionnement 1, s'étend sensiblement perpendiculairement à la direction de convoyage 4 du convoyeur 10 en zone de dépose 7, ou du convoyeur principal 12. Plus particulièrement, le groupe de préparation est donc comme logé entre, d'une part, le moyen d'alimentation 5 et, en perpendiculaire, les équipements suivant du dispositif de conditionnement 1. Cela aboutit alors à une configuration où les collecteurs 9 sont faciles d'accès en cas de besoin de maintenance, et où une configuration extrêmement compacte peut être obtenue pour contenir tant le dispositif de conditionnement 1 que le groupe de préparation amont.

Les collecteurs 9, entre, d'une part, le groupe de préparation, et, d'autre part, les modules suivants du dispositif de conditionnement 1, comme le module de sélection 22 ou cycleur 14 ou le moyen de nappage 15, sont donc animés d'un mouvement qui est essentiellement perpendiculaire à la direction de convoyage 4 du convoyeur principal 12. L'agencement global forme donc une machine compacte et les différents groupes fonctionnels restent donc accessibles. Le dispositif de conditionnement 1 forme ainsi, vu de haut, une configuration en L, dans le creux de laquelle se trouve le groupe de préparation.

Selon une caractéristique additionnelle possible, la machine de traitement comprend un moyen d'éjection pour extraire, avant la prise par le moyen d'alimentation 5, les produits 3 non conformes en sortie du groupe de préparation. Cette éjection se positionne donc préférablement au niveau du moyen d'entraînement à la sortie du groupe de préparation, puisque les produits 3 y sont référencés et connus en position à l'unité. Les produits 3 détectés en amont comme non conformes sont ainsi éjectés et on évite que des produits 3 non conformes soient saisis par les collecteurs 9, ce qui assure que les produits 3 fournis par le moyen d'alimentation 5 sont tous conformes.

Dans des modes de réalisation particuliers ne faisant pas partie de l'invention, le moyen de transfert 8 du dispositif de conditionnement 1 forme la sortie du groupe de préparation et assure ainsi lui-même le transfert de produits 3 entre, d'une part, le groupe de préparation, et, d'autre part, le dispositif de conditionnement 1, plus particulièrement directement au niveau des collecteurs 9 du moyen d'alimentation 5. Le moyen de transfert 8 forme ainsi tant la sortie du groupe de préparation que l'entrée du moyen d'alimentation 5 du dispositif de conditionnement 1. La machine de traitement 17 assure ainsi elle-même et de façon intégrée, d'une part, la fonction du groupe de préparation, à savoir l'étiquetage ou remplissage-bouchage terminal, voire aussi des fonctions de préparation amont, et, d'autre part, la fonction de conditionnement des produits 3 qui sont débités. La machine de traitement 17 est donc pourvue d'un seul et même moyen traitant les produits 3 de façon référencée à l'unité à l'interface entre le dispositif de conditionnement 1 et le groupe de préparation. Les produits 3 finis en sortie de groupe de préparation circulent donc sur un moyen de transfert 8 au niveau duquel les collecteurs 9 du moyen d'alimentation 5 viennent directement les saisir. On assure ainsi la continuité du référencement. Autrement dit, le moyen d'alimentation 5 du dispositif de conditionnement 1 prend les produits 3 directement à la sortie référencée des produits 3 du groupe de préparation.

Selon une caractéristique additionnelle possible, la machine de traitement 17 présente, d'une part, une roue 19, de transfert référencé, positionnée à la sortie du groupe de préparation et délivrant les produits 3 à l'unité, et, d'autre part, une vis 20 entre ladite roue 19 et le moyen de transfert 8 du moyen d'alimentation 5, ladite vis 20 et le moyen de transfert 8 étant synchronisés. La roue 19 de transfert référencé peut prendre la forme d'une étoile en sortie du module d'étiquetage 18 qui forme le groupe de préparation. La vis 20 est donc synchronisée avec le mouvement du moyen de transfert 8 en aval, qui amène les produits aux collecteurs 9 du moyen d'alimentation 5. Elle permet soit de déplacer de façon référencée les produits 3 depuis la sortie du groupe de préparation amont jusqu'au moyen de transfert 8, soit de recréer un référencement.

Dans certains modes de réalisation qui ne font pas partie de l'invention, la vis 20 est aussi synchronisée à la roue 19 de transfert de la sortie du groupe de préparation, de sorte à garantir un déplacement des produits 3 contrôlé en position depuis la sortie du module d'étiquetage 18 ou groupe de préparation, jusqu'à la prise par le au moins un collecteur 9. Le contrôle en position de chaque produit est donc optimal et le process est efficient ca adapté à chaque produit 3.

Il est aussi envisageable que la machine de traitement 17 présente une zone d'accumulation amont 23 des produits 3 en aval de la roue 19 et en amont de la vis 20, où les produits 3 s'accumulent librement en unifilaire pour former un flux continu même si le débit de produits 3 entrants est discontinu, par exemple compte tenu d'une éjection, en amont, de produits 3 non conformes.

L'invention a aussi pour objet un procédé mettant en œuvre l'invention telle que décrite ci-dessus, à savoir un procédé d'alimentation d'un dispositif de conditionnement 1 de produits tel que décrit ci-dessus, au sein duquel ils évoluent dans une direction de convoyage 4 lors de leur conditionnement en lots 2, notamment par fardelage.

Selon l'invention, les produits 3 sont transférés de façon référencée à l'unité depuis une zone de prise 6 en amont où les produits 3 arrivent de façon référencée à l'unité les uns à la suite des autres jusqu'à une zone de dépose 7 au niveau d'un convoyeur 10 où ils circulent ensuite en plusieurs colonnes pour leur conditionnement. Les produits 3 sont donc déposés dans les colonnes longitudinales successives directement par le moyen d'alimentation 5. Leur positionnement correct en vue du conditionnement par lots 2 fardelés est donc contrôlé et garanti, à l'inverse de solutions d'alimentation à base de convoyeurs du type tapis roulant.

Selon une caractéristique additionnelle possible, plusieurs produits 3 sont déposés simultanément sur le convoyeur 10 par chaque collecteur 9 en zone de dépose 7, en particulier tous les produits 3 formant une rangée complète transversale à la direction de convoyage 4 et participant ainsi à la constitution d'au moins un lot 2. Les collecteurs 9 libèrent donc en même temps tous les produits 3 qui forment une rangée transversale dans le lot 2, ce qui permet de simplifier la synchronisation du mouvement du convoyeur 10 ou convoyeur de dépose 13 dédié. La dépose par les collecteurs 9 peut ainsi former les rangées transversales successives d'un seul lot 2 ou de plusieurs lots 2 en même temps, dans les cas où le dispositif de conditionnement 1 traite plusieurs colonnes de lots 2 les unes à côté des autres. Au moment de la dépose, les produits 3 dans les collecteurs 9 reproduisent donc la forme de la rangée transversale.

Dans les cas où un collecteur 9 ne transporte pas seul l'intégralité des produits 3, plusieurs collecteurs 9 peuvent se rapprocher les uns des autres pour reproduire, ensemble, la configuration de la rangée du lot 2.

Selon une autre caractéristique additionnelle possible, le mouvement d'avance du convoyeur 10 sur lequel les produits 3 sont déposés et la fréquence de dépose sur lui des produits 3 sont coordonnés, de sorte que le convoyeur 10 avance de l'équivalent d'une rangée transversale dès lors qu'une telle rangée a été déposée, pour faire place à la rangée suivante dans le lot 2 ou encore dès lors que les collecteurs 9, destinés à transférer ensemble toute une rangée d'un lot 2 futur, ont déposé les produits 3 qu'ils contenaient.

Le procédé peut présenter aussi d'autres caractéristiques techniques détaillées ci-dessous.

Selon une caractéristique additionnelle possible, le procédé comprend une étape d'éjection, après la prise du produit 3, au cours de laquelle un collecteur 9 comprenant au moins un produit 3 non conforme est sorti du circuit le reliant à la zone de dépose 7. L'éjection de produits 3 non conformes se fait donc au niveau des collecteurs 9, grâce à la conception du circuit sur lequel ils circulent et à leur pilotage à l'unité. Comme la position de chaque produit 3 est connue, il est possible d'éviter la fourniture de produits 3 défectueux dans les lots 2.

Selon une autre caractéristique additionnelle possible, après la prise de produits 3, les collecteurs 9 sont regroupés pour former ensemble un groupe de produits 3 alignés et à déposer simultanément, notamment une rangée d'un lot 2, ce qui permet notamment de mettre en œuvre pour l'ensemble des produits 3, une étape de dépose, et ce de façon simultanée.

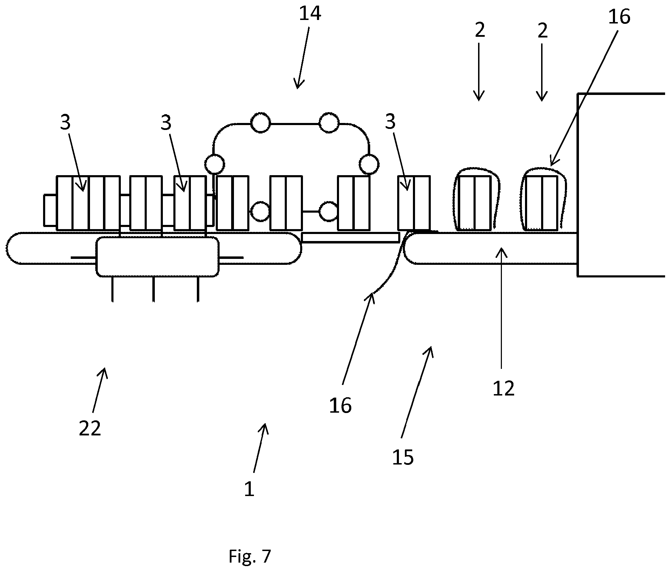

Dans le mode de réalisation illustrée dans les figures annexées, le dispositif de conditionnement 1 prend la forme d'un dispositif de fardelage, dans lequel, pour l'opération de fardelage proprement dit, les produits 3 circulent sur un convoyeur principal 12 sous forme de lots 2, dans une direction de convoyage 4. Un lot 2 présente plusieurs produits 3 alignés en rangée transversale à la direction de convoyage 4, et généralement aussi plusieurs produits 3 alignés dans la direction de convoyage 4. Un lot 2 a donc une configuration matricielle, avec ou sans quinconce, les produits 3 étant alors alignés de façon compacte tant dans la direction de convoyage 4 que transversalement. Comme le montre la figure 7, les lots 2 évoluent ainsi dans le dispositif de conditionnement 1 en étant espacés les uns des autres dans la direction de convoyage 4. Dans un tel dispositif de conditionnement 1, pour l'opération de fardelage, un lot 2 de produits 3 vient généralement être entouré d'un film 16 plastique, puis circule dans un tunnel chauffé où le film 16 se rétracte et maintient alors les produits 3 les uns contre les autres.

Les produits 3 sont généralement des bouteilles, flacons, etc., remplis et étiquetés dans un groupe de préparation, avant cette étape de conditionnement secondaire qui vise, quant à elle, à les regrouper et lier en fardeaux autoportés. En amont de ce dispositif de conditionnement 1 se trouve donc un équipement qui réalise le produit 3 lui-même en terminant généralement par une étape d'étiquetage. Un tel module d'étiquetage 18 génère à sa sortie des produits 3 à l'unité, les uns après les autres, généralement à l'aide de carrousel tournants, le dispositif de conditionnement 1 produisant, quant à lui, des lots 2 successifs comprenant chacun plusieurs produits 3. A la sortie du module d'étiquetage 18, les produits 3 circulent donc les uns à la suite des autres dans la direction d'avance. Un module d'étiquetage 18 à partir d'éléments tournants, type carrousels, à la périphérie desquels se trouvent les produits 3, est par exemple décrit dans US2010276028.

De façon générale, le module d'étiquetage 18 comprend au moins, à sa sortie, un moyen d'entraînement des produits 3 à l'unité, tel qu'une étoile rotative entre les branches de laquelle se trouvent les produits 3. A la sortie du module d'étiquetage 18, les produits 3 sont donc déplacés de façon contrôlée à l'unité par ce moyen d'entraînement, à la différence, par exemple, d'une solution d'entraînement en vrac où la position de chaque produit 3 n'est pas connue précisément, ou même un convoyage en colonne sur un tapis, alors non contrôlé car n'empêchant pas le glissement des produits 3 voire leur chute, étant insensible à leur absence, etc.

Le dispositif de conditionnement 1 est ainsi muni d'un moyen d'alimentation 5, qui assure sa fourniture en produits 3 depuis la sortie du module d'étiquetage 18. Comme le montre la figure 1, l'organisation des produits 3 doit passer d'une organisation en une seule colonne à la sortie du module d'étiquetage 18 ou groupe de préparation à une organisation en plusieurs colonnes pour le conditionnement dans le dispositif de conditionnement 1 sous forme de lots 2 à base de rangées de plusieurs produits 3 chacune. Plusieurs lots 2 peuvent en outre se trouver alignés transversalement à la direction de convoyage 4. Le passage de la configuration unifilaire à la configuration multifilaire est réalisé à l'aide du moyen d'alimentation 5, comme il est décrit ici.

Le moyen d'alimentation 5 comprend ainsi au moins un collecteur 9 mobile, ce collecteur 9 pouvant saisir et déplacer au moins un produit 3 depuis la zone de prise 6, où les produits 3 circulent encore en unifilaire, jusqu'à la zone de dépose 7 où les produits 3 sont organisés en plusieurs colonnes sur un convoyeur 10 qui les emmène pour leur conditionnement. La figure 1 montre par exemple un dispositif d'alimentation 5 qui ne comprend qu'un collecteur 9, ce collecteur 9 pouvant à son tour recevoir un seul produit 3 et le placer dans la colonne correspondante.

Le collecteur 9 du moyen d'alimentation 5 est mobile de façon contrôlée et connue, ce qui permet de connaître à chaque instant avec précision la position du au moins un produit 3 qu'il déplace. Le collecteur 9 comprend ainsi, par exemple, pour chaque produit 3 qu'il doit déplacer, une alvéole pour simplement au moins retenir le produit 3 par le corps, ou encore un préhenseur pour saisir proprement dit chaque produit 3, à son col ou ailleurs.

La position du collecteur 9, lorsqu'il lâche les produits 3 en zone de dépose 7, est donc connue et maîtrisée, au moins dans la direction transversale à la direction de convoyage 4. Cela permet ainsi de garantir la position transversale du au moins un produit 3 amené par le au moins un collecteur 9 et donc de déposer ledit au moins un produit 3 immédiatement au bon endroit dans la direction transversale. En effet, la constitution de lots nécessite des produits 3 répartis transversalement à la direction de convoyage 4, ce que peut réaliser un tel collecteur 9 de position connue et contrôlée, adapté pour assurer un référencement du au moins un produit 3 qu'il déplace. Les collecteurs 9 sont en effet munis préférablement de moyens mécaniques pour saisir chaque produit 3 séparément, et sont montés sur une navette mobile de façon contrôlée.

Le produit 3 est donc référencé entre la zone de prise 6, qui peut être directement la sortie du groupe de préparation, et la zone de dépose 7, à partir de laquelle s'effectue l'opération de conditionnement secondaire proprement dite. Il est ainsi possible de maîtriser exactement l'endroit où le produit 3 sera déposé sur le convoyeur 10, c'est-à-dire en particulier au niveau de quelle colonne longitudinale. Ainsi, grâce à la maîtrise et au référencement du produit 3 lors du trajet et de la dépose en zone de dépose 7, il est possible de déposer un produit 3 destiné à former le premier produit 3 d'une rangée transversale d'un lot 2, puis, avec un autre collecteur 9, de déposer le produit 3 destiné à former le deuxième produit 3 d'une telle rangée, puis celui pour le troisième produit 3 de la rangée, etc. Il est bien entendu possible de larguer simultanément tous les produits 3 formant une rangée transversale d'un lot 2. Un collecteur 9 peut en effet récolter plusieurs produits 3 successivement en les recevant les uns à côté des autres dans une direction qui est ensuite transversale à la direction de convoyage 4, de sorte que la dépose simultanée de tous les produits 3 amène immédiatement à la réalisation d'une rangée transversale de plusieurs produits 3, pour créer, en en groupant plusieurs, au moins un lot 2, voire plusieurs lots 2 alignés transversalement à la direction de convoyage 4. Le référencement des produits 3 à l'unité à l'aide du collecteur 9 mobile de façon contrôlée assure ainsi de façon immédiate la dépose contrôlée dans les colonnes longitudinales successives.

Les produits 3 sont largués par les collecteurs 9 au niveau d'une zone de dépose 7 dans laquelle se trouve un convoyeur 10. Ils sont déposés sur le convoyeur 10 qui les introduit ensuite au cœur de la séquence des étapes de conditionnement : circulation en couloirs séparés ; écartement des groupes de rangées transversales définissant un lot 2 ; synchronisation avec le nappage ou enrobage ; ou directement nappage. Les produits 3 sont ainsi déposés au plus tard lors du nappage proprement dit, ou enrobage par le film 16, directement à l'entrée de l'une de ces étapes. Comme il sera encore décrit plus loin, le largage des produits 3 peut donc, selon les configurations, se faire à différents endroits avant l'enrobage du lot 2 par le film 16 dans le moyen de nappage 15 : soit à l'entrée d'un convoyage en couloirs ; soit à l'entrée d'un cycleur référencement ; soit directement à l'entrée de la table de nappage 15.

Une accumulation longitudinale peut être prévue en aval de la dépose par le collecteur 9, voire directement au niveau de la zone de dépose 7. Des couloirs de circulation sont alors préférablement aménagés préférablement à l'aide de parois longitudinales pour éviter l'imbrication des produits 3 sous forme d'une organisation en quinconce qui ferait perdre l'avantage de la dépose contrôlée en position transversale. Les produits 3 s'accumulent alors dans ces couloirs en colonnes longitudinales, ce qui garantit la présence d'un nombre suffisant de produits 3 dans la direction de convoyage 4 pour constituer des lots 2 formés de plusieurs rangées transversales.

Une telle zone d'accumulation aval 11, en aval du transfert, par la flotte de collecteurs 9 que comprend le moyen d'alimentation 5, permet en particulier d'éviter les vides dans l'agencement matriciel en continu des produits 3 tel qu'il est requis pour le conditionnement par lots 2 fardelés. Elle permet aussi de mettre en œuvre des configurations où le nombre de produits 3 que transporte chaque collecteur 9 ne correspond pas au nombre de produits 3 d'une rangée transversale d'un lot 2. En effet, dans ce genre de cas, les produits 3 d'une même rangée ne sont pas nécessairement largués en même temps, et il est alors utile de ménager une telle zone d'accumulation aval 11 pour compléter chaque rangée transversale.

Dans des réalisations avantageuses, chaque collecteur 9 est capable de recevoir plusieurs produits 3 et de les déplacer simultanément vers la zone de dépose 7. Les produits 3 sont donc reçus successivement dans un tel collecteur 9 depuis la sortie du module d'étiquetage 18, préférablement directement au niveau du moyen d'entraînement à sa sortie, type étoile. Le collecteur 9 présente ainsi des zones de réception unique alignées dans une direction qui correspond ultérieurement à la direction transversale à la direction de convoyage 4, soit la direction d'une rangée. Les produits 3 du collecteur 9 sont ensuite déposés tous simultanément sur le convoyeur 10 en zone de dépose 7. Cet ensemble de produits 3 forme ainsi directement une rangée du lot 2 transversale à la direction de convoyage 4 et on évite l'étape d'éclatement puis organisation d'un flux de produits 3 initialement unifilaire. On peut bien sûr effectuer une telle opération pour plusieurs lots 2 simultanément.

Il suffit ensuite, par un mouvement du convoyeur 10 sur lequel la rangée vient d'être déposée, de la dégager pour pouvoir recevoir les produits 3 du collecteur 9 suivant. Préférablement, après la dépose des produits 3 destinés à former une rangée du lot 2, le convoyeur 10 avance d'une distance qui correspond à une telle rangée, de sorte que la rangée suivante vient contre la précédente, ce qui aboutit immédiatement et par la seule opération de collecte puis transfert, à la formation d'un lot 2 compact. L'espacement entre les lots 2 peut être géré en rallongeant la durée qui sépare deux déposes successives de produits 3 destinés à former une rangée et/ou en accélérant le mouvement du convoyeur 10.

Bien entendu, il est important d'éviter que les produits 3 défectueux ou non conformes en sortie du module d'étiquetage 18 se retrouvent dans des lots 2 enrobés ensuite de film 16 et conditionnés dans le dispositif de conditionnement 2, ce qui rendrait alors tout le lot 2 non conforme.

L'éjection de produits 3 non conformes peut être organisée au niveau de la sortie du module d'étiquetage 18, avant la saisie des produits 3 par les collecteurs 9, au niveau du moyen d'entraînement en étoile. Ainsi, un moyen de contrôle est intégré au sein du module d'étiquetage 18 et permet d'identifier les produits 3 qui ne sont pas acceptables. Le trajet de chaque produit 3 au sein du module d'étiquetage 18 étant suivi, il est possible d'éjecter précisément les produits 3 non conformes, en particulier au niveau du moyen d'entraînement à l'unité placé en sortie du module d'étiquetage 18 formant le groupe de préparation. Par exemple, un convoyeur spécifique peut être prévu au niveau de la roue étoilée en sortie du module d'étiquetage 18 pour que les produits 3 non conformes y soient déposés, de sorte que seuls les produits 3 conformes peuvent continuer leur trajet vers les collecteurs 9. Le flux de produits 3 en aval de cette étoile peut donc présenter des discontinuités ou produits 3 manquants, qui correspondent aux produits 3 qui ont été éliminés en amont, et le fonctionnement des collecteurs 9 est adapté.

L'éjection, en aval du module d'étiquetage 18, des produits 3 non conformes peut aussi être assurée par les collecteurs 9 eux-mêmes, une fois les produits 3 saisis. En particulier, lorsque les collecteurs 9 sont des collecteurs 9 prévus pour un seul produit 3 à la fois, le collecteur 9 identifié comme déplaçant un produit 3 non conforme peut ainsi tout simplement ne pas être amené en zone de dépose 7. Alternativement, un dispositif complémentaire peut venir extraire du collecteur le produit 3 défectueux, etc.

On comprend alors que l'éjection de produits 3 non conformes, en amont de la saisie des produits 3 par les collecteurs 9, ou au moins en amont de la dépose par les collecteurs 9, génère des manques de produits 3 qu'il convient de gérer pour éviter d'aboutir à des lots 2 non complets.

Une zone d'accumulation libre unifilaire peut par exemple être prévue pour les produits 3 en amont du moyen d'alimentation 5, ce qui garantit que ce dernier saisit, les uns après les autres, en continu, des produits 3 qui sont tous conformes. Une zone d'accumulation plurifilaire peut aussi être prévue en aval de la libération plurifilaire des produits 3 par le moyen d'alimentation 5. La pluralité de rangées transversales successives et en contact que comprennent les lots 2 est ainsi définie ultérieurement à cette accumulation, par exemple par un module de sélection 22 ou encore un module cycleur 14, voir figure 7. Cette accumulation en aval permet aux produits 3 déposés dans une colonne après un manque produit 3 de rattraper ceux déjà déposés antérieurement.

Comme le montrent les figures 1 à 6, le moyen d'alimentation 5 récupère préférablement les produits 3 au niveau d'un moyen de transfert 8 référencé ou moyen d'entraînement, généralement sous forme de roue 19 ou étoile à alvéoles périphériques dans lesquelles chaque fois un produit 3 peut se trouver en sortie du module d'étiquetage 18. L'étiquetage peut par ailleurs se réaliser alors que les produits 3 sont dans ce moyen de transfert 8. Les collecteurs 9 circulent quant à eux sur un guide ou rail 21 qui rencontre le trajet périphérique du moyen de transfert 8 pour pouvoir opérer un changement d'entraînement au niveau des produits 3 qui passent alors d'un entraînement par le moyen de transfert 8 ou roue à un entraînement par les collecteurs 9, comme illustré en figure 6.

Lors de ce passage de l'un à l'autre, le collecteur 9 est préférablement animé d'un mouvement similaire à celui du produit 3 dans la roue 19, garantissant ainsi un passage fluide de l'un à l'autre. L'alvéole dans laquelle se trouve le produit 3 au niveau de la roue ou étoile et l'alvéole du collecteur 9 dans laquelle il doit continuer son trajet sont donc au moins momentanément animés d'un mouvement de même vitesse, en direction, sens, et célérité. On notera qu'une façon de gérer l'absence éventuelle de produit 3 dans la roue suite à l'élimination d'un produit défectueux peut alors consister à ne pas avancer le collecteur 9 si l'alvéole en vis-à-vis est vide de produit 3, ce qui garantit que les collecteurs 9 arrivant en zone de dépose 7 sont systématiquement remplis de produits 3 conformes.

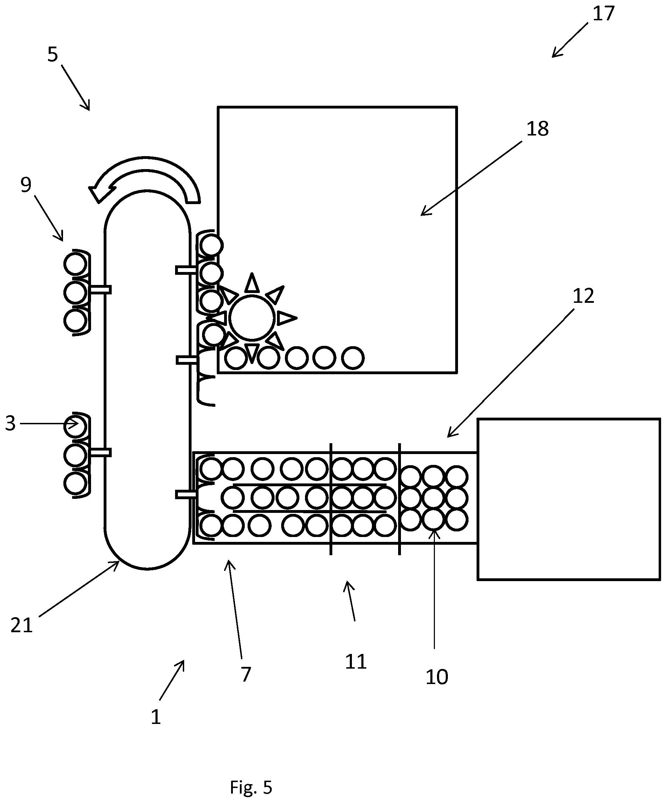

Comme le montrent les figures 5 et 6, dans le cas où le collecteur 9 est dimensionné pour plusieurs produits 3, une fois positionné pour la réception, il s'étend linéairement le long d'une tangente à l'étoile de sortie du module d'étiquetage 18, de sorte que son mouvement amène à la périphérie de l'étoile les zones de réception uniques successivement. Dans le cas où les collecteurs 9 sont dimensionnés pour un seul produit 3 à la fois, comme le montre par exemple la figure 5, le rail 21 de guidage peut par exemple présenter une courbure telle un demi tour, en vis-à-vis de la courbure du moyen de transfert 8, et au niveau de laquelle s'organise le passage des produits 3 du moyen de transfert 8 aux collecteurs 9. Le transfert dans le collecteur 9 peut aussi se faire alors qu'il circule sur une portion droite.

On notera aussi que les collecteurs 9 sont donc utilisés de façon cyclique : après avoir récupéré le au moins un produit 3, le collecteur 9 va ensuite le déposer, puis, par une portion de retour, revenir pour recommencer ce cycle. Le rail 21 a donc une portion utile en boucle fermée sur laquelle circulent les collecteurs 9 pour déplacer les produits 3 entre les deux zones.

L'intégration entre, d'une part, le module d'étiquetage 18 et, d'autre part, en aval, le dispositif de conditionnement 1, et, plus particulièrement, son moyen d'alimentation 5, peut s'agencer de différentes façons. Par exemple, dans les figures 1, 2, 3 ou 5, qui ne font pas partie de l'invention, le moyen d'alimentation 5 saisit les produits 3 directement depuis l'étoile ou roue 19 de sortie du module d'étiquetage 18 ou groupe de préparation, ce qui aboutit à un équipement intégrant tant la fonction de réalisation au moins finale du produit 3, du type étiquetage, que la fonction de conditionnement par fardelage de lots 2.

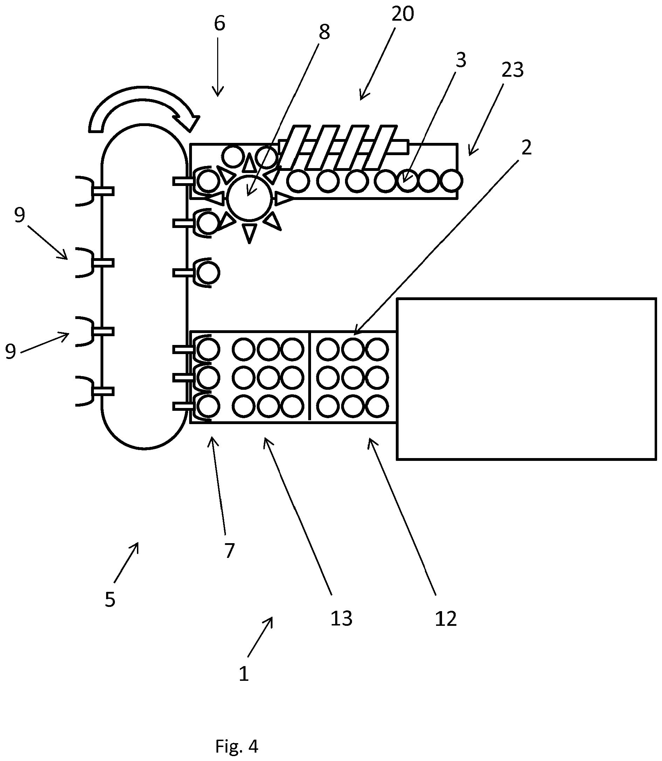

Comme le montre la figure 4, le moyen d'alimentation 5 du dispositif de conditionnement 1 peut aussi charger les produits 3 depuis une étoile différente de celle de la sortie du module d'étiquetage 18, ce qui permet en particulier de réutiliser un module d'étiquetage 18 existant, sans modification structurelle, et donc de proposer des solutions dites de « retro-fit ». L'alimentation de cette étoile 8 en produits 3 se fait préférablement à l'aide d'une vis 20 dont le pas correspond normalement à l'espacement des alvéoles de réception sur l'étoile. Le pas peut bien sûr être évolutif entre le début et la fin de la vis 20. Une telle vis 20 permet de façon générale de référencer des produits 3 qui circulaient précédemment librement. Un tel convoyage libre peut provenir du groupe de préparation directement ou après division du flux unifilaire qu'il débite en plusieurs flux parallèles.

La vis 20 peut ici être utilisée en étant totalement synchronisée tant avec l'étoile ou moyen de transfert 8 en aval qu'avec le moyen d'entraînement en amont, à la sortie du module d'étiquetage 18. Dans ce cas, cette vis 20 réalise donc une fonction de référencement, d'espacement, et de déplacement, lors de laquelle la position de chaque produit 3 est connue et maîtrisée depuis la sortie du module d'étiquetage 18 jusqu'à un moyen de transfert 8 alors déporté.

Une zone d'accumulation amont 23 peut aussi être prévue, dans laquelle les produits 3 sortis du module d'étiquetage 18 les uns après les autres sont convoyés librement, par exemple avec un tapis en aval qui circule plus rapidement que le débit de la vis 20. La vis 20 est alors aménagée en aval de cette zone d'accumulation amont 23 et référence à nouveau les produits 3 en vue de leur prise dans le moyen de transfert 8 qui requiert des produits 3 espacés les uns des autres d'une façon contrôlée. En aval de l'étoile du module d'étiquetage 18, les produits 3, jusqu'alors référencés à l'unité, passent donc dans une zone d'accumulation amont 23 dans laquelle ils se regroupent au contact les uns des autres. Pour référencer à nouveau les produits 3 après une telle perte de contrôle, le moyen d'alimentation 5 est pourvu préférablement d'une vis 20, qui définit un espace entre les produits 3 et d'une roue qui assure ensuite le transfert des produits 3.

Les configurations où la vis 20 n'est pas synchronisée permettent un montage en aval d'un module d'étiquetage 18 ou groupe de préparation existant, sans modification structurelle. Le recours à une vis 20 synchronisée sur la sortie du module d'étiquetage 18 nécessite une légère adaptation structurelle du module d'étiquetage 18 existant. Les configurations où les produits 3 sont directement pris par les collecteurs 9 à la sortie du module d'étiquetage 18 forment des machines complètes, totalement intégrées, assurant tant la fonction de fardelage qu'au moins une fonction d'étiquetage. Dans les cas où la roue du groupe de préparation et la roue du moyen d'alimentation 5 ne sont pas les mêmes, cette dernière permet de correctement référencer et contrôler chaque produit 3 avant leur prise, à l'unité, par les collecteurs 9.

De façon générale, le moyen d'alimentation 5 assure donc préférablement, d'une part, le déplacement des produits 3 depuis la zone de prise 6 en sortie du module d'étiquetage 18 jusqu'à la zone de dépose 7, qui peut se situer à différents endroits en amont d'un moyen de nappage 15 par film 16, et, d'autre part, la création, à partir d'un flux unifilaire de produits 3 continu les uns derrière les autres, de segments destinés à former les rangées des lots 2 qui sont transversales à la direction de convoyage 4, formant ainsi un flux plurifilaire. La coordination avec l'avance du convoyeur 10 qui déplace successivement dans la direction de convoyage 4 ces rangées de produits 3 permet l'obtention de lots 2 comprenant chacun plusieurs telles rangées plaquées les unes contre les autres.

Un dispositif de conditionnement 1 classique par fardelage présente la succession de différents modules jusqu'à celui dans lequel le lot 2 matriciel de produits 3 est enrobé d'un film 16, voir figure 7. Le dispositif d'alimentation 5 peut donc fournir les produits 3 à différents endroits en amont de cette fonction d'enrobage :
- à l'entrée d'un module de sélection 22 où des produits 3, précédemment en colonne de produits 3 au contact les uns des autres, sont successivement retenus par des doigts plus lent que leur tapis d'entraînement, pour créer des espaces longitudinaux ;
- à l'entrée d'un module cycleur 14, assurant, à l'aide de barres transversales évoluant plus vite que le tapis d'entraînement, que les espaces longitudinaux sont compatibles avec l'enrobage en aval par film 16 ;
- à l'entrée d'un moyen de nappage 15, éventuellement directement sur le film 16 en cours d'enrobage.

Bien entendu, dans chacune des configurations, les produits 3 peuvent être déposés par le moyen d'alimentation 5 sur un convoyeur de dépose 13 dédié, alimentant ensuite l'une de ces entrées.

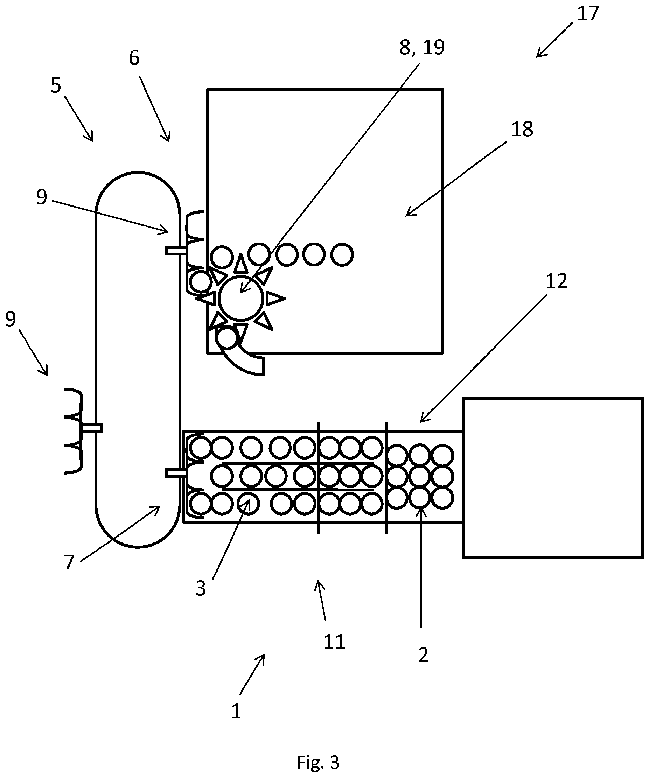

Comme le montrent les figures 3 et 4, le moyen d'alimentation 5 comprend préférablement une batterie de collecteurs 9, qui circulent sur un rail 21 de guidage que comprend ledit moyen. Il est ainsi possible d'animer de mouvement ces collecteurs 9 grâce à un principe de moteur linéaire magnétique, ce qui présente l'avantage de pouvoir tant gérer que contrôler la position et la vitesse de chaque collecteur 9 séparément. Les collecteurs 9 sont donc montés sur des navettes déplacées grâce au principe de moteur linéaire.

Les collecteurs 9 sont ainsi mobiles les uns par rapport aux autres. Par conséquent, avant la dépose, il est possible de les rapprocher les uns des autres jusqu'à ce qu'ils forment un alignement compact, s'étendant transversalement à la direction de convoyage 4 en zone de dépose 7 pour reproduire alors la rangée du lot 2 transversale à la direction de convoyage 4. Ils peuvent ensuite déposer simultanément les produits 3 qu'ils contiennent, et former alors une rangée. Cela est en particulier utilisable avec des collecteurs 9 qui ne transportent qu'un produit 3 à la fois et qui ne sont pas regroupés lorsqu'ils collectent les produits 3.

Comme la position exacte de chaque collecteur 9 est connue et maîtrisée, il est aussi possible de prévoir qu'ils larguent chacun à leur tour le au moins produit 3 transporté, dans la colonne longitudinale correspondante, puis de n'avancer le convoyeur de dépose 13 pour la rangée suivante qu'une fois qu'une rangée complète a été déposée.

Comme le montrent les figures 1 à 5, le rail 21 est préférablement en boucle fermée, entre deux demi-tours qui se trouvent approximativement, pour l'un, au niveau de la sortie du module d'étiquetage 18 et, pour l'autre, au niveau des modules servant au conditionnement au lot 2.

Le circuit que forme le rail 21 présente donc une portion principale qui sert à la circulation des collecteurs entre la zone de prise 6 et la zone de dépose 7 pour le déplacement des produits 3 entre ces zones. Ce circuit peut aussi présenter des bifurcations ou aiguillages vers d'autres tronçons servant, par exemple, à mettre hors circuit des collecteurs 9 défectueux ou transportant au moins un produit 3 non conforme. Ces autres tronçons peuvent aussi servir à une accumulation de produits 3, une accumulation de collecteurs 9 chargés ou vides, éventuellement des collecteurs 9 compatibles avec un autre format, etc. Le circuit complet du rail 21 peut donc être formé, par exemple, d'une boucle fermée principale, puis de portions éventuellement superposées les unes aux autres, que les produits 3 peuvent quitter puis rejoindre, etc., comme le montre la figure 8. Bien entendu, les boucles successives sont préférablement contrarotatives.

Le moyen d'alimentation 5 se substitue donc aux solutions classiques de convoyage par tapis sur lequel reposent les produits 3 et où le passage d'un flux unifilaire en sortie d'étiqueteuse à un flux plurifilaire pour le conditionnement crée des problèmes de coincement ou bourrage.

On comprend donc que dans les cas où les collecteurs 9 ne déplacent pas le nombre de produits 3 qui correspond à une rangée transversale du lot 2, en particulier les cas où les collecteurs 9 ne véhiculent, chacun, qu'un produit 3, il est possible de modifier à chaque fois la position transversale à laquelle les collecteurs 9 larguent les produits 3, de sorte à obtenir, après plusieurs déposes successives, une configuration de produits 3 répartie en plusieurs colonnes longitudinales, adjacentes transversalement à la direction de convoyage 4 et formant les rangées transversales. Une zone d'accumulation aval 11 peut alors servir à assurer que les rangées transversales sont bien au contact les unes des autres.

On peut aussi imaginer que des collecteurs 9 de capacité inférieure à une rangée transversale du lot 2 se regroupent, de façon permanente ou temporaire au cours du cycle, pour transporter ensemble autant de produits 3 que doit en contenir au moins une rangée, et les déposer simultanément. Le recours à des collecteurs 9 qui coopèrent avec un seul produit 3 à chaque fois garantit cependant la versatilité du moyen d'alimentation 5, puisqu'un nouveau format de lot 2, en termes de nombre de produits 3 dans une rangée transversale ou dans une colonne longitudinale, ne nécessite aucune modification structurelle, uniquement un réglage différent du fonctionnement des collecteurs 9. En outre, un avantage supplémentaire du recours à des collecteurs 9 à capacité unique est leur extraction du circuit dès lors que le produit 3 particulier qu'ils transportent n'est pas conforme. On évite ainsi de mettre hors circuit des produits 3 qui sont en fait conformes. Dans le cas d'une extraction de produits 3 non conformes en amont à la prise par le collecteur 9, l'utilisation de collecteur 9 ayant une capacité d'un seul produit 3 permet facilement de faire attendre le collecteur 9 jusqu'à l'arrivée du prochain produit 3 conforme.

Dans les cas où la capacité des collecteurs 9 correspond au nombre de produits 3 dans une rangée transversale, un collecteur 9 transporte normalement à chaque fois le nombre de produits 3 pour une rangée. Il est alors possible de larguer simultanément l'ensemble des produits 3 qu'il véhicule, créant alors une rangée en une seule opération. Le mouvement longitudinal du convoyeur sur lequel les produits 3 sont déposés permet ensuite de cumuler des rangées les unes contre les autres dans la direction de convoyage 4.

C'est donc grâce au contrôle en position des collecteurs 9 que le moyen d'alimentation 5 assure la répartition à l'unité des produits 3 dans la direction transversale à la direction de convoyage 4.

En outre, de façon générale, comme chaque produit 3 est saisi directement depuis le module d'étiquetage 18, l'orientation du produit 3 est maîtrisée, ce qui présente un avantage certain dès lors que les produits 3 ont une forme spéciale et/ou que leur orientation dans le lot 2 a une importance, comme par exemple des produits 3 à base rectangulaire, etc., ou encore des produits 3 de révolution, mais à positionner d'une façon prédéfinie. Comme chaque produit 3 est saisi et préférablement immobilisé dans le collecteur 9, son orientation est contrôlée. Il est aussi possible d'utiliser un collecteur 9 avec un degré de liberté autour d'un axe, motorisé ou non, pour modifier l'orientation des produits 3 de façon contrôlée entre la saisie par les collecteurs 9 et leur dépose.

Un moyen d'accumulation peut aussi être prévu entre la zone de prise 6 et la zone de dépose 7, par exemple avec une table d'accumulation sur laquelle les collecteurs 9 viennent déposer puis reprendre les produits 3, ou un autre moyen permettant d'assurer un tampon entre le module d'étiquetage 18 et le dispositif de conditionnement 1.

Grâce à l'invention, il est ainsi possible de proposer une solution d'alimentation de dispositif de conditionnement de produits 3 en lots 2 par fardelage, qui est fiable, versatile, et qui limite de façon remarquable les équipements à prévoir en amont d'un moyen de nappage 15 pour organiser les produits en un flux multifilaire.

Bien que la description ci-dessus se base sur des modes de réalisations particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Machine de traitement (17) de produits (3), du type bouteilles, flacons, bidons, ou autres contenants, comprenant un groupe de préparation de produits (3) à l'unité, délivrant des produits (3) finis et référencés à l'unité les uns derrière les autres en unifilaire, ladite machine comprenant, en outre, monté en aval dudit groupe de préparation et recevant les produits (3) que débite le groupe de préparation, un dispositif de conditionnement (1), pour conditionner en lots (2) lesdits produits (3), au sein duquel, pour leur conditionnement, les produits (3) évoluent le long d'une direction de convoyage (4), lesdits lots (2) présentant, transversalement à ladite direction de convoyage (4), au moins deux produits (3), ledit dispositif (1) comprenant un moyen d'alimentation (5), pour recevoir des produits (3) circulant en unifilaire au niveau d'une zone de prise (6) en amont et les amener au niveau d'une zone de dépose (7) pour leur conditionnement ultérieur,
le moyen d'alimentation (5) comprenant, d'une part, en zone de prise (6), un moyen de transfert (8) à l'unité des produits (3) arrivant en unifilaire, et, d'autre part, au moins un collecteur (9) mobile et de position contrôlée, pour recevoir puis déplacer de façon contrôlée en position au moins un produit (3) depuis le moyen de transfert (8) jusqu'à la zone de dépose (7),
le dispositif (1) comprenant, en outre, un convoyeur (10) en zone de dépose (7) sur lequel le au moins un collecteur (9) dépose le au moins un produit (3) qu'il a préalablement embarqué en zone de prise (6), machine de traitement (17) **caractérisée en ce que**
le moyen de transfert (8) est apte à être alimenté à l'aide d'une vis (20) dont le moyen d'alimentation (5) est pourvu, ladite vis permettant de référencer des produits (3) qui circulaient librement précédemment audit dispositif de conditionnement (1).

2. Machine de traitement (17) selon la revendication 1, **caractérisé en ce que**
ledit dispositif de conditionnement (1) présente une zone d'accumulation aval (11), au sein de laquelle les produits (3) peuvent s'accumuler en plusieurs colonnes adjacentes qui s'étendent le long de la direction de convoyage (4) après avoir été déposés par le moyen d'alimentation (5).

3. Machine de traitement (17) selon l'une quelconque des revendications 1 ou 2, **caractérisé en ce que**
ledit dispositif de conditionnement (1) comprend, d'une part, un convoyeur principal (12), qui déplace les produits (3) pour leur conditionnement au sein dudit dispositif en aval du moyen d'alimentation (5), et, d'autre part, un convoyeur de dépose (13) formant le convoyeur (10) sur lequel le au moins un collecteur (9) dépose le au moins un produit (3) qu'il a embarqué, l'avance du convoyeur de dépose (13) étant synchronisée avec la dépose successive de produits (3) sur lui assurée par le au moins un collecteur (9).

4. Machine de traitement (17) selon l'une quelconque des revendications 1 à 3, **caractérisé en ce que**
ledit dispositif de conditionnement (1) comprend un module adapté pour éloigner longitudinalement les uns des autres dans la direction de convoyage (4) les produits (3) organisés en colonnes adjacentes s'étendant dans ladite direction, de sorte à former des lots (2) successifs, du type module cycleur (14) ou de sélection (22), le moyen d'alimentation (5) déposant les produits (3) à l'entrée dudit module.

5. Machine de traitement (17) selon l'une quelconque des revendications 1 à 3, **caractérisé en ce que**
ledit dispositif de conditionnement (1) comprend un moyen de nappage (15), où les produits (3) organisés en lots (2) successifs sont enrobés de film (16) pour un rétreint ultérieur visant la formation de fardeaux autoportés maintenu par ledit film (16), le moyen d'alimentation (5) déposant les produits (3) à l'entrée dudit moyen de nappage (15).

6. Machine de traitement (17) selon l'une quelconque des revendications 1 à 5, **caractérisée en ce que**
le groupe de préparation et le dispositif de conditionnement (1) sont agencés de sorte que, vu de haut, le moyen d'alimentation (5), entre le groupe de préparation et les éléments suivants du dispositif de conditionnement (1), s'étend sensiblement perpendiculairement à la direction de convoyage (4) du convoyeur (10) en zone de dépose (7).

7. Machine de traitement (17) selon l'une quelconque des revendications 1 à 6, **caractérisée en ce que**
elle comprend un moyen d'éjection pour extraire, avant la prise par le moyen d'alimentation (5), les produits (3) non conformes en sortie du groupe de préparation.

8. Procédé d'alimentation d'un dispositif de conditionnement (1) de produits (3) d'une machine de traitement (17) selon l'une quelconque des revendications précédentes, au sein duquel ils évoluent dans une direction de convoyage (4) lors de leur conditionnement en lots (2), un groupe de préparation de produits (3) à l'unité, délivrant des produits (3) finis et référencés à l'unité les uns derrière les autres en unifilaire, **caractérisé en ce que**
les produits (3) sont transférés de façon référencée à l'unité depuis une zone de prise (6) en amont où les produits (3) arrivent de façon référencée à l'unité les uns à la suite des autres jusqu'à une zone de dépose (7) au niveau d'un convoyeur (10) où ils circulent ensuite en plusieurs colonnes pour leur conditionnement,
les produits (3) qui circulaient précédemment librement depuis ledit groupe de préparation étant référencés à l'aide d'une vis (20) qui alimente un moyen de transfert (8), en zone de prise (6).

9. Procédé d'alimentation selon la revendication 8, où
plusieurs produits (3) sont déposés simultanément sur le convoyeur (10) par chaque collecteur (9) en zone de dépose (7), en particulier tous les produits (3) formant une rangée complète transversale à la direction de convoyage (4) et participant ainsi à la constitution d'au moins un lot (2).

10. Procédé d'alimentation selon l'une quelconque des revendications 8 ou 9, où
le mouvement d'avance du convoyeur (10) sur lequel les produits (3) sont déposés et la fréquence de dépose sur lui des produits (3) sont coordonnés.

## Patentansprüche

1. Bearbeitungsmaschine (17) für Produkte (3) vom Typ Flaschen, Flakons, Kanister oder anderer Behälter, welche eine Einheit zur stückweisen Herstellung von Produkten (3) umfasst, welche fertige und einzeln referenzierte Produkte (3) einreihig hintereinander abgibt, wobei die Maschine außerdem eine Verpackungsvorrichtung (1), die stromabwärts der Herstellungseinheit angebracht ist und die Produkte (3) aufnimmt, welche die Herstellungseinheit liefert, zum Verpacken der Produkte (3) in Chargen (2) umfasst, innerhalb welcher sich die Produkte (3) zwecks ihrer Verpackung entlang einer Förderrichtung (4) bewegen, wobei die Chargen (2) quer zu der Förderrichtung (4) wenigstens zwei Produkte (3) aufweisen, wobei die Vorrichtung (1) ein Zuführmittel (5) umfasst, um sich einreihig bewegende Produkte (3) an einem Aufnahmebereich (6) stromaufwärts aufzunehmen und sie einem Absetzbereich (7) zwecks ihrer späteren Verpackung zuzuführen,
wobei das Zuführmittel (5) einerseits, im Aufnahmebereich (6), ein Mittel zum einzelnen Transfer (8) der einreihig ankommenden Produkte (3) und andererseits wenigstens einen beweglichen und positionsgesteuerten Aufnehmer (9) zum Aufnehmen und anschließenden positionsgesteuerten Bewegen wenigstens eines Produkts (3) von dem Transfermittel (8) bis zu dem Absetzbereich (7) umfasst,
wobei die Vorrichtung (1) außerdem einen Förderer (10) im Absetzbereich (7) umfasst, auf welchem der wenigstens eine Aufnehmer (9) das wenigstens eine Produkt (3) absetzt, welches er zuvor im Aufnahmebereich (6) mitgenommen hat,
wobei die Bearbeitungsmaschine (17) **dadurch gekennzeichnet ist, dass** das Transfermittel (8) geeignet ist, mithilfe einer Schnecke (20) gespeist zu werden, mit der das Zuführmittel (5) versehen ist, wobei die Schnecke ermöglicht, Produkte (3), welche sich zuvor frei bewegt haben, zu der Verpackungsvorrichtung (1) zu referenzieren.

2. Bearbeitungsmaschine (17) nach Anspruch 1, **dadurch gekennzeichnet, dass**
die Verpackungsvorrichtung (1) einen stromabwärtigen Staubereich (11) aufweist, in welchem sich die Produkte (3) in mehreren benachbarten Reihen, welche sich entlang der Förderrichtung (4) erstrecken, ansammeln können, nachdem sie von dem Zuführmittel (5) abgesetzt worden sind.

3. Bearbeitungsmaschine (17) nach einem der Ansprüche 1 oder 2, **dadurch gekennzeichnet, dass**
die Verpackungsvorrichtung (1) einerseits einen Hauptförderer (12) umfasst, welcher die Produkte (3) zwecks ihrer Verpackung innerhalb der Vorrichtung stromabwärts des Zuführmittels (5) bewegt, und andererseits einen Absetzförderer (13), der den Förderer (10) bildet, auf welchem der wenigstens eine Aufnehmer (9) das wenigstens eine Produkt (3) absetzt, welches er mitgenommen hat, wobei der Vorschub des Absetzförderers (13) mit dem aufeinander folgenden Absetzen von Produkten (3) auf ihm synchronisiert ist, das durch den wenigstens einen Aufnehmer (9) sichergestellt wird.

4. Bearbeitungsmaschine (17) nach einem der Ansprüche 1 bis 3, **dadurch gekennzeichnet, dass**
die Verpackungsvorrichtung (1) ein Modul umfasst, das dazu eingerichtet ist, die Produkte (3) in der Förderrichtung (4), die in sich in dieser Richtung erstreckenden benachbarten Reihen organisiert sind, längs voneinander zu entfernen, so dass aufeinander folgende Chargen (2) gebildet werden, vom Typ eines Moduls zum zyklischen Bewegen (14) oder eines Auswahlmoduls (22), wobei das Zuführmittel (5) die Produkte (3) am Eingang des Moduls absetzt.

5. Bearbeitungsmaschine (17) nach einem der Ansprüche 1 bis 3, **dadurch gekennzeichnet, dass**
die Verpackungsvorrichtung (1) ein Umwicklungsmittel (15) umfasst, wo die in aufeinander folgenden Chargen (2) organisierten Produkte (3) mit Folie (16) umhüllt werden, für eine spätere Schrumpfung zwecks Bildung von selbsttragenden Paletten, die durch die Folie (16) gehalten werden, wobei das Zuführmittel (5) die Produkte (3) am Eingang des Umwicklungsmittels (15) absetzt.

6. Bearbeitungsmaschine (17) nach einem der Ansprüche 1 bis 5, **dadurch gekennzeichnet, dass**
die Herstellungseinheit und die Verpackungsvorrichtung (1) derart angeordnet sind, dass, von oben gesehen, das Zuführmittel (5) sich zwischen der Herstellungseinheit und den nachfolgenden Elementen der Verpackungsvorrichtung (1) im Wesentlichen senkrecht zu der Förderrichtung (4) des Förderers (10) im Absetzbereich (7) erstreckt.

7. Bearbeitungsmaschine (17) nach einem der Ansprüche 1 bis 6, **dadurch gekennzeichnet, dass**
sie ein Auswurfmittel umfasst, um vor der Aufnahme durch das Zuführmittel (5) die nicht konformen Produkte (3) am Ausgang der Herstellungseinheit zu entnehmen.

8. Verfahren zur Zuführung von Produkten (3) einer Bearbeitungsmaschine (17) nach einem der vorhergehenden Ansprüche zu einer Verpackungsvorrichtung (1), innerhalb welcher sie sich bei ihrer Verpackung in Chargen (2) in einer Förderrichtung (4) bewegen, wobei eine Einheit zur stückweisen Herstellung von Produkten (3) fertige und einzeln referenzierte Produkte (3) einreihig hintereinander abgibt, **dadurch gekennzeichnet, dass**
die Produkte (3) einzeln referenziert von einem stromaufwärts angeordneten Aufnahmebereich (6), wo die Produkte (3) einzeln referenziert nacheinander ankommen, bis zu einem Absetzbereich (7) an einem Förderer (10) transportiert werden, wo sie sich anschließend zwecks ihrer Verpackung in mehreren Reihen bewegen,
wobei die Produkte (3), welche sich zuvor frei von der Herstellungseinheit her bewegt haben, mithilfe einer Schnecke (20) referenziert werden, welche ein Transfermittel (8) im Aufnahmebereich (6) speist.

9. Verfahren zur Zuführung nach Anspruch 8, wobei
mehrere Produkte (3) gleichzeitig von jedem Aufnehmer (9) im Absetzbereich (7) auf dem Förderer (10) abgesetzt werden, wobei insbesondere alle Produkte (3) eine vollständige Reihe quer zur Förderrichtung (4) bilden und so an der Bildung wenigstens einer Charge (2) teilnehmen.

10. Verfahren zur Zuführung nach einem der Ansprüche 8 oder 9, wobei
die Vorschubbewegung des Förderers (10), auf welchem die Produkte (3) abgesetzt werden, und die Frequenz des Absetzens der Produkte (3) auf ihm koordiniert sind.

## Claims

1. Processing machine (17) for processing products (3), of the type including bottles, flasks, cans or other containers, comprising a preparation assembly for preparing products (3) individually delivering finished and individually referenced products (3) behind one another in single file, said machine comprising, furthermore, mounted downstream of said preparation assembly and receiving the products (3) discharged by the preparation assembly, a packaging device (1) for packaging said products (3) in batches (2), within which, for packaging thereof, the products (3) travel along a conveying direction (4), said batches (2) having, transversely to said conveying direction (4), at least two products (3), said device (1) comprising a feed means (5) for receiving products (3) circulating in single file at an upstream pick-up area (6) and conducting them to a set-down area (7) for subsequent packaging thereof,
the feed means (5) comprising, on the one hand, in the pick-up area (6), a transfer means (8) for individually transferring the products (3) arriving in single file, and, on the other hand, at least one movable, controlled-position collector (9) for receiving and then moving, in a position-controlled manner, at least one product (3) from the transfer means (8) to the set-down area (7),
the device (1) comprising, furthermore, a conveyor (10) in the set-down area (7) onto which the at least one collector (9) sets down the at least one product (3) that it has previously captured in the pick-up area (6),
which processing machine (17) is **characterized in that** the transfer means (8) is able to be supplied by means of a screw (20) with which the feed means (5) is provided, said screw making it possible to reference products (3) which circulated freely previous to said packaging device (1).

2. Processing machine (17) according to Claim 1, **characterized in that**
said packaging device (1) has a downstream accumulation area (11), within which the products (3) can accumulate in a plurality of adjacent columns which extend along the conveying direction (4) after having been set down by the feed means (5) .

3. Processing machine (17) according to either one of Claims 1 and 2, **characterized in that**
said packaging device (1) comprises, on the one hand, a main conveyor (12), which moves the products (3) for packaging thereof within said device downstream of the feed means (5), and, on the other hand, a set-down conveyor (13) forming the conveyor (10) onto which the at least one collector (9) sets down the at least one product (3) that it has captured, the advancing movement of the set-down conveyor (13) being synchronized with the successive setting-down of products (3) thereon that is provided by the at least one collector (9).

4. Processing machine (17) according to any one of Claims 1 to 3, **characterized in that**
said packaging device (1) comprises a module adapted to longitudinally move apart from one another, in the conveying direction (4), the products (3) organized into adjacent columns extending in said direction, so as to form successive batches (2), of the cycler (14) or selection (22) module type, the feed means (5) setting down the products (3) at the inlet of said module.

5. Processing machine (17) according to any one of Claims 1 to 3, **characterized in that**
said packaging device (1) comprises a wrapping means (15), in which the products (3) organized into successive batches (2) are covered with film (16) for subsequent shrinkage with the aim of forming self-contained bundles secured by said film (16), the feed means (5) setting down the products (3) at the inlet of said wrapping means (15).

6. Processing machine (17) according to any one of Claims 1 to 5, **characterized in that**
the preparation assembly and the packaging device (1) are arranged in such a way that, as viewed from above, the feed means (5), between the preparation assembly and the following elements of the packaging device (1), extends substantially perpendicularly to the conveying direction (4) of the conveyor (10) in the set-down area (7).

7. Processing machine (17) according to any one of Claims 1 to 6, **characterized in that**
it comprises an ejection means in order, before pick-up by the feed means (5), to extract the non-compliant products (3) at the outlet of the preparation assembly.

8. Method for feeding a packaging device (1) for products (3) of a processing machine (17) according to any one of the preceding claims, within which they travel in a conveying direction (4) during packaging thereof in batches (2), a preparation assembly for preparing products (3) individually delivering finished and individually referenced products (3) behind one another in single file, **characterized in that**
the products (3) are transferred in an individually referenced manner from an upstream pick-up area (6) where the products (3) arrive in an individually referenced manner following one another to a set-down area (7) at a conveyor (10), where they then circulate in a plurality of columns for packaging thereof,
the products (3) which previously circulated freely from said preparation assembly being referenced by means of a screw (20) which feeds a transfer means (8), in the pick-up area (6).

9. Feeding method according to Claim 8, in which
a plurality of products (3) are set down simultaneously onto the conveyor (10) by each collector (9) in the set-down area (7), in particular all the products (3) forming a complete row transverse to the conveying direction (4) and thus participating in the composition of at least one batch (2).

10. Feeding method according to either one of Claims 8 and 9, in which
the advancing movement of the conveyor (10) onto which the products (3) are set down and the frequency of setting down the products (3) thereon are coordinated.
